# EUROPEAN PATENT SPECIFICATION

(11) **EP 1 518 164 B1**
(45) Date of publication and mention of the grant of the patent: **06.02.2008**
(21) Application number: 03735922.1
(22) Date of filing: 16.06.2003
(51) Int. Cl.: G06F 7/58

(54) **METHOD AND APPARATUS FOR GENERATING A RANDOM NUMBER USING META-STABLE LATCHES**
VERFAHREN UND VORRICHTUNG ZUR GENERIERUNG VON ZUFALLSZAHLEN MITTELS METASTABILER FLIP-FLOPS
PROCEDE ET APPAREIL DESTINES A GENERER UN NOMBRE ALEATOIRE AU MOYEN DE BASCULES METASTABLES

(30) Priority: 20.06.2002 US 176210
(43) Date of publication of application: 30.03.2005
(73) Proprietor: NXP B.V., 5656 AG Eindhoven (NL)
(72) Inventor: EPSTEIN, Michael, Briarcliff Manor, NY 10510 (US)
(74) Representative: Röggla, Harald
(86) International application number: PCT/IB2003/002755
(87) International publication number: WO 2004/001583

(56) References cited:
- WO-A-01/46797
- WO-A-01/67231
- US-A- 5 963 104
- US-A1- 2003 023 647
- "INTEGRATED CIRCUIT COMPATIBLE RANDOM NUMBER GENERATOR" IBM TECHNICAL DISCLOSURE BULLETIN, IBM CORP. NEW YORK, US, vol. 30, no. 11, 1 April 1988 (1988-04-01), pages 333-335, XP000021682 ISSN: 0018-8689

## Description

The present invention is related to US 6,631,390 B1 entitled "Method and Apparatus for Generating Random Numbers Using Flip-Flop Meta-Stability," assigned to the assignee of the present invention.

The present invention relates to random number generation, and more particularly, to a method and apparatus for generating random numbers using the meta-stable behavior of latches.

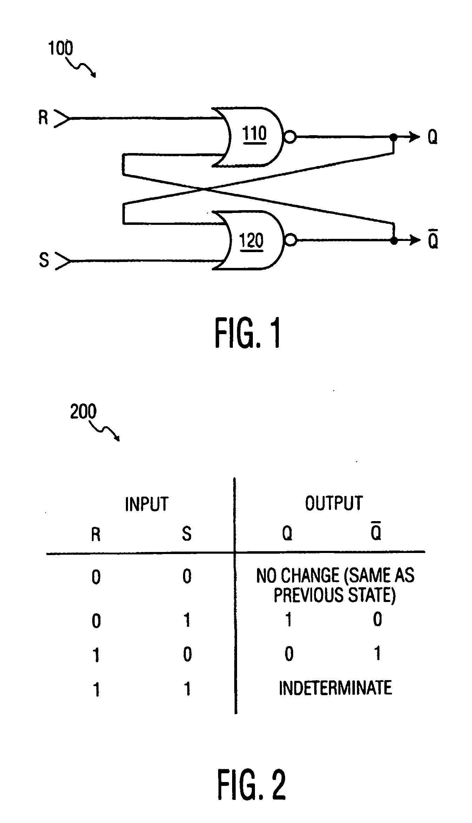

Latches and flip-flops are widely used in computers and other electronic devices, for example, as sampling, counting and storage elements. A conventional R-S latch 100 is shown in FIG. 1. As in FIG. 1, the R-S latch 100 is comprised of two NOR gates 110 and 120. The outputs of the two NOR gates 110, 120 are cross-connected to a respective input of the opposite NOR gate. Thus, NOR gate 110 receives the output of NOR gate 120 and a reset signal, R, as inputs. Likewise, NOR gate 120 receives the output of NOR gate 110 and the set signal, S, as inputs. The output of the R-S latch 100 for each of the various input combinations is shown in the table 200 in FIG. 2.

Thus, the latches 100 shown in FIG. 1 are susceptible to meta-stability when both inputs to the latch 100 are set at a high logic value (" 11 ") and then transition to a state where both inputs are at a low value ("00"). This transition occasionally causes the latch outputs to oscillate unpredictably in a statistically known manner. For a detailed discussion of meta-stability, see, for example, Application Note, A Meta-Stability Primer, AN219, Philips Semiconductors (Nov. 15, 1989), incorporated by reference herein. In theory, the latch 100 can oscillate indefinitely. In practice, however, the latch 100 will randomly arrive at a random output value of either logic low or high. Typically, these meta-stable values are subsequently detected by other circuitry in a given application and can be interpreted as different logic level states or assume an intermediate state that can be misinterpreted by other logic gates.

Many applications and electronic devices require random numbers, including games of chance, such as poker, roulette, and slot machines. In particular, numerous cryptographic algorithms and protocols depend on a non-predictable source of random numbers to implement secure electronic communications and the like. A random number generator should generate every possible permutation in the designated range of numbers. In addition, the random number generator should not be biased and should generate any given number with the same probability as any other number. Moreover, the random number generator should generate random numbers that cannot be predicted, irrespective of the size of the collection of previous results. Thus, the random numbers should be completely unpredictable and non-susceptible to outside influences.

United States Patent 5,963,104 proposes a method of generating random numbers by using a plurality of digital oscillators generated using standard cell components. Different clock signals generated by the ring oscillators are clocked by a plurality of D-type flip-flops using a common clock signal, so that each flip-flop will intermittently enter a meta-stable state. The suggested method is based on the fact that the timing characteristics of such ring oscillators depend on the fabrication process, the fabrication environment, and the ambient temperature, resulting in a non-deterministic random number generation.

International Publication WO 01/46797 A1 suggests another random number generator based on clocking a clock signal. The output of one oscillator is used to clock the output of another oscillator using a D-type flip-flop, which, as a result, will intermittently enter a meta-stable state. The output of the d-type flip-flop, being random, is used to generate a random bit stream which is in turn used to generate random numbers.

WO 01/67231 A2 (= US 6,631,390 B1), entitled "Method and Apparatus for Generating Random Numbers Using Flip-Flop Meta-Stability," discloses a method and apparatus for generating random numbers using the meta-stable behavior of D-type flip-flops comprising inherent series-connected latches. A flip-flop is clocked with an input that deliberately violates the setup or hold times (or both) of the flip-flop to ensure meta-stable behavior. A bit is collected whenever there is an error. If meta-stability occurs more frequently with one binary value (either zero or one) for a given class of flip-flops, an even random number distribution is obtained by "marking" half of the zeroes as "ones" and the other half of the zeroes as "zeroes." In addition, half of the ones are marked as "ones" and the other half are marked as "zeroes".

It has been found that the duration and occurrence of meta-stability can be affected by noise. Thus, noise can be employed to influence the output of the random number generator.

While such random number generators based on the meta-stable behavior of flip-flops provide an effective mechanism for generating random numbers using only digital technology, they each employ a single flip-flop and thus must presume an understanding of what the output was supposed to be. It would be desirable to have a random number generator that uses only digital technology but does not require any presumptions about the output.

Generally, a method and apparatus are disclosed for generating random numbers using the meta-stable behavior of latches. Each time a latch becomes meta-stable, the outcome of the oscillation is random as to the outcome or logic value attained after the oscillation ceases. If the output of a latch differs from the value that would have been attained during correct operation of the latch (i.e., a "mistake"), then a meta-stable event can be detected. When two or more substantially identical latches operate in parallel, a mistake can be detected when at least two of the latches have different outputs. The detection of a mistake can be used to trigger the generation of a random bit in accordance with the present invention.

As previously indicated, a latch is susceptible to meta-stability when both inputs to the latch are set at a high logic value ("11") and then transition to a state where both inputs are at a low value ("00"). The present invention operates a number of latches in parallel, and applies the same binary value to each input of each latch. Thus, when a value of "00" is applied to each latch, the latches will be expected to maintain their previous state. When a value of "11" is followed by a state where both inputs are at a low value ("00") for each latch, however, the state of the latches may be indeterminate, causing a random shift before stabilizing at a random output value of either logic low or high. Thus, when two latches stabilize to different values, a mistake can be identified thereby triggering the generation of a random bit in accordance with the present invention.

One aspect of the present invention is a method as defined in independent claim 1. Another aspect of the invention is an apparatus as defined in independent claim 12. Further embodiments of the invention are specified in the respective appended dependent claims.

A more complete understanding of the present invention, as well as further features and advantages of the present invention, will be obtained by reference to the following detailed description and drawings.
FIG. 1 illustrates a conventional R-S latch;
FIG. 2 is a table indicating the various output values of the R-S latch of FIG. 1 for each input combination;
FIGS. 3A and 3B, collectively, illustrate a random number generator in accordance with the present invention;
FIG. 4 illustrates a set of waveforms produced by the circuits of FIG. 3A and 3B; and
FIG. 5 illustrates a selection circuit that may be employed in one embodiment of the present invention to detect a meta-stable event when a plurality of latches is employed.

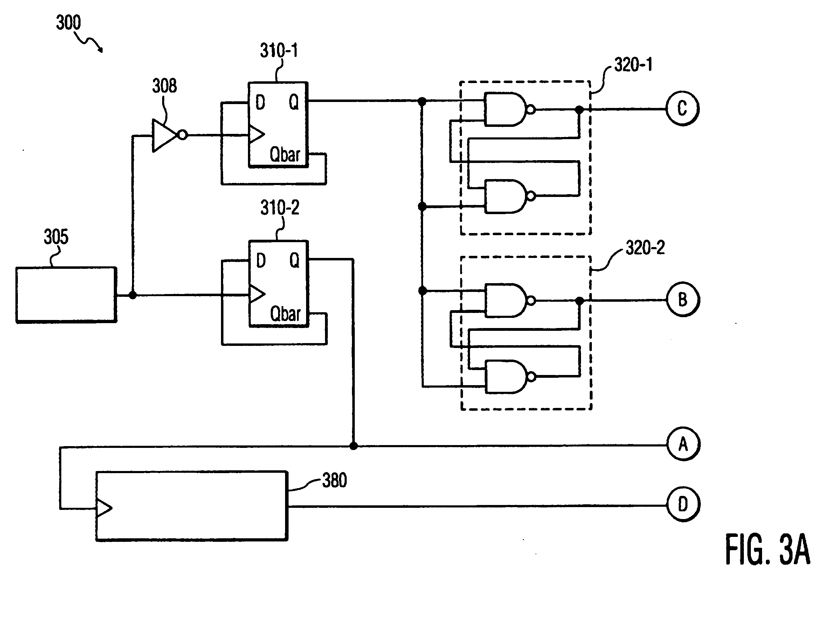

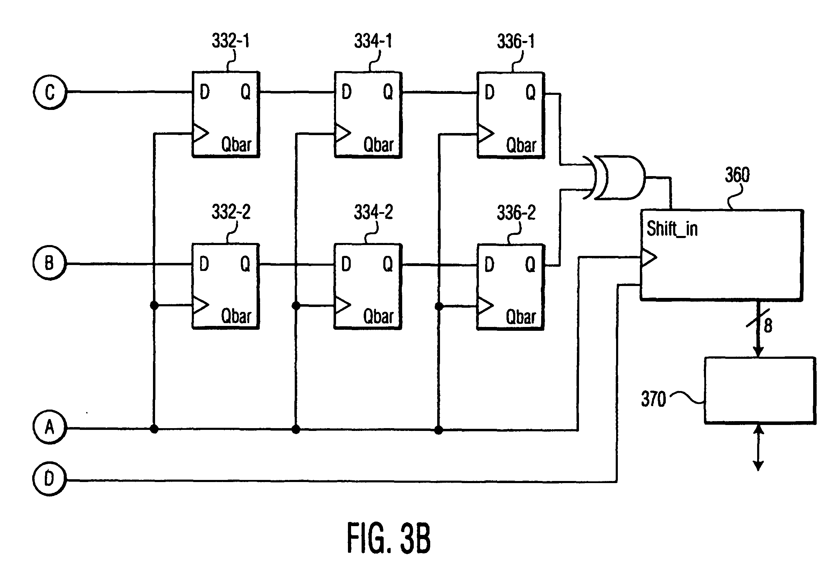

FIGS. 3A and 3B, collectively, illustrate a random number generator 300 in accordance with the present invention. As shown in FIG. 3, the exemplary random number generator 300 includes a pair of latches 320-1, 320-2, that are driven into the meta-stable region. As discussed more fully below, the output of the latches 320-1, 320-2 are captured by a circuit that removes the meta-stability and compares the output. When the two outputs of the substantially identical latch circuits are different, a "mistake" is detected and a random bit is generated. Thus, the meta-stable operation of either of the latches 320-1, 320-2 provides a mechanism for generating random numbers.

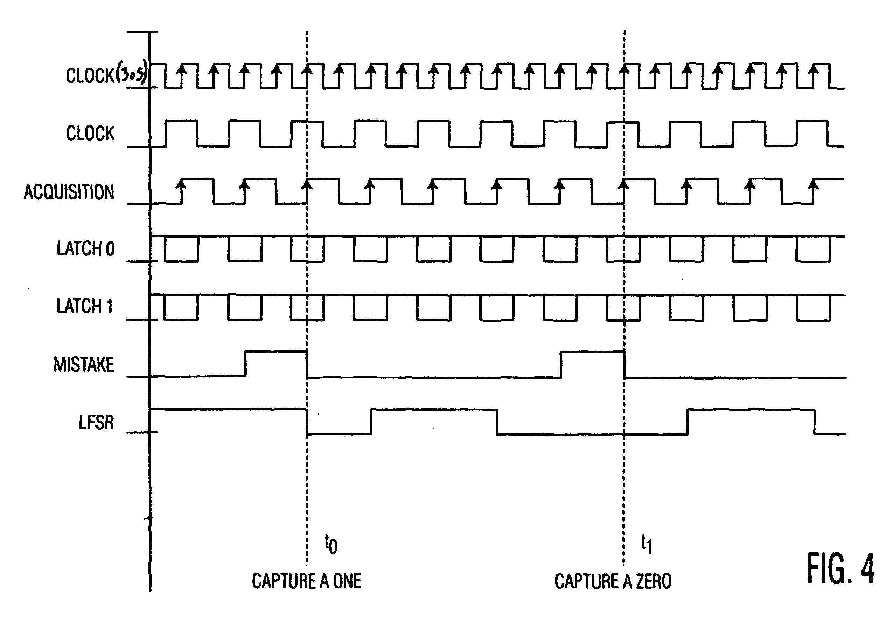

As shown in FIG. 3A, a "Clock" signal is generated by a clock oscillator 305. The Clock signal is applied to the inputs of a pair of D-type flip-flops 310-1, 310-2 whose Qbar outputs are fed back into their D inputs. The D-type flip-flops 310 provide a divide-by-two mechanism. The clock input of the flip-flop 310-1 is inverted by an inverter 308. Thus, the Stimulus signal generated by the flip-flop 310-1 is 180 degrees out of phase with the Acquisition signal generated by the flip-flop 310-2. The Acquisition signal advances and LFSR 380 generates a bit stream that statistically is half ones and half zeros. It is noted that the various waveforms shown in FIG. 4 are obtained at the corresponding labeled sample points in FIGS. 3A or 3B.

As shown in FIGS. 3A and 4, the latches 320-1 and 320-2 are driven by the Stimulus signal generated by the flip-flop 310-1. As previously indicated, latches, such as the latches 320-1 and 320-2 shown in FIG. 3A, are susceptible to meta-stability when both inputs to the latch 310 are set at a low logic value ("00") and then transition to a state where both inputs are at a high value ("11"). It is noted that the latches 320-1 and 320-2 in FIG. 3A are comprised of NAND gates and work differently than the NOR gate latch 100 of FIG. 1. Thus, as shown in FIG. 4, the output of the latches 320-1 and 320-2, labeled "Latch0" and Latch1" in FIG. 3A, respectively, are potentially indeterminate each time the Stimulus signal is high. While the output of one of the NAND gates in each latch 320-1 and 320-2 is designated as the output of the latch 320-1 and 320-2, the output of either NAND gate can be selected (since they are substantially identical), as would be apparent to a person of ordinary skill in the art. As a result of the non-uniform delay in each of the latches 320 and as a result of the non-uniform delay from the meta-stable behavior a potentially indeterminate signal may be generated. Thus, to make the random number generator 300 suitable for synchronous applications, an illustrative mechanism is provided in FIG. 3B to synchronize the waveforms Latch0 and Latch1 with one another. It is noted that the circuitry of FIGS. 3A and 3B are connected by joining the bubbles of like letters.

The synchronizing circuitry shown in FIG. 3B includes a number of serial flip-flops 332-n, 334-n and 336-n associated with each latch 320. The serial flip-flops 332, 334 and 336 are selected so as to not enter a meta-stable state easily. In addition, if one of these flip-flops 332, 334, 336 does become meta-stable, the period of the clock signal should be long enough so that the output of the meta-stable flip-flop will settle to a fixed logic value (either 0 or 1), such that when the signal is sampled at the next flip-flop 332, 334, 336, the flip-flop is stable. In this manner, each flip-flop 332, 334, 336 improves the chance of synchronizing the output Latch0 or Latch1 with the one another, while removing any indeterminate logic state. Indeed, the chances of incorrect behavior for such a circuit will be measured in tens of years.

The exclusive or gate ("XOR") 350 compares the synchronized version of the waveforms Latch0 and Latch1. Since the output of the XOR gate 350 will be high if and only if the two inputs differ, the output of the XOR gate 350 ("Mistake") will be high if the waveform Latch0 does not match the waveform Latch1. The Mistake may arise from: (i) one latch 320 becoming meta-stable and the other latch 320 remaining stable; (ii) both latches 320 becoming meta-stable but arriving at different end states; or (iii) driving the flip-flops 332, 334, 336 into the meta-stable state. In any case, a Mistake should be a relatively rare event, dependent upon, e.g., the implementation technology and circuit layout. It is noted that in an alternate embodiment, a Mistake can be defined as the waveforms Latch0 and Latch1 matching one another.

The output of the XOR gate 350 ("Mistake") is applied to the shift input (Shift_in) of a shift register 360, and the shift register 360 will shift a bit over from the LFSR signal (discussed below) every time there is a Mistake. The shift register 360 is clocked by the Acquisition signal. Thus, the first embodiment of the present invention collects a bit whenever there is an error (mistake). The output of the shift register 360 is applied to a computer interface 370.

As shown in FIG. 4, a mistake is detected at time to by the XOR gate 350, causing a bit equal to one (based on the LFSR signal) to be acquired. Similarly, a mistake is detected at time t₁ by the XOR gate 350, causing a bit equal to zero (based on the LFSR signal) to be acquired.

As previously indicated, marking input bits in the manner discussed above in conjunction with FIGS. 3A and 3b to generate the Acquisition signal provides an even distribution of random output bits. It has been found, however, that the duration and occurrence of meta-stability can be affected by noise. Thus, if the noise is correlated to the Acquisition signal, then the output of the random number generator will not be random.

Therefore, according to one embodiment of the invention, a nearly unbiased (with regards to frequency of zeroes and ones) signal source is used as the marking signal. The marking signal is uncorrelated with a high probability to any noise in the system. The present invention optionally employs a linear feedback shift register (LFSR) 380 with sufficient length to decrease the chance of correlation and reduce any bias in the LFSR output. Suitable LFSRs are described, for example, in Bruce Schneier, Applied Cryptography, pages 369-388 (Wiley, 1994).

The linear feedback shift register 380 generates an LFSR Mark signal, shown in FIG. 4, that creates slightly more than half of its output as zeroes in the waveform. In this manner, the LFSR mark signal is uncorrelated to a high probability to any noise.

The linear feedback shift register 380 should provide a sufficient number of bits to decrease the chance of correlation and reduce any bias in the LFSR output. For a linear feedback shift register 380 comprised of n flip-flops, there will be 2n-1 binary numbers before the numbers begin to repeat. Thus, as the number of flip-flops in the linear feedback shift register 380 increases, the -1 in the 2n-1 binary expression becomes less significant. In any event, since the direction of any bias attributable to the -1 term is known, the bias can be removed or corrected with a suitable circuit.

Thus, the linear feedback shift register 380 provides a marking output, LFSR mark, that is pseudo-random, with approximately half of the output bits being a zero and the other half of the output bits being a one.

It has been observed that if the linear feedback shift register 380 is insecure, a portion of the output (even a random portion) may allow the state of the linear feedback shift register 380 to be known. In this manner, it would be possible to predict the output of the random number generator 300.

Thus, a linear feedback shift register 380 should be utilized that has no discernable statistics, thereby making the state information of the linear feedback shift register 380 useless. In a further variation, additional security is achieved by releasing the collected bits out of the shift register 360 and by allowing some of the collected bits to be lost in each collection interval.

The shift register 360 shifts a bit over from the LFSR mark signal every time there is a Mistake. In this manner, the arrival times of the mistakes are not discerned, and someone cannot predict which bits of the linear feedback shift register 380 will be chosen.

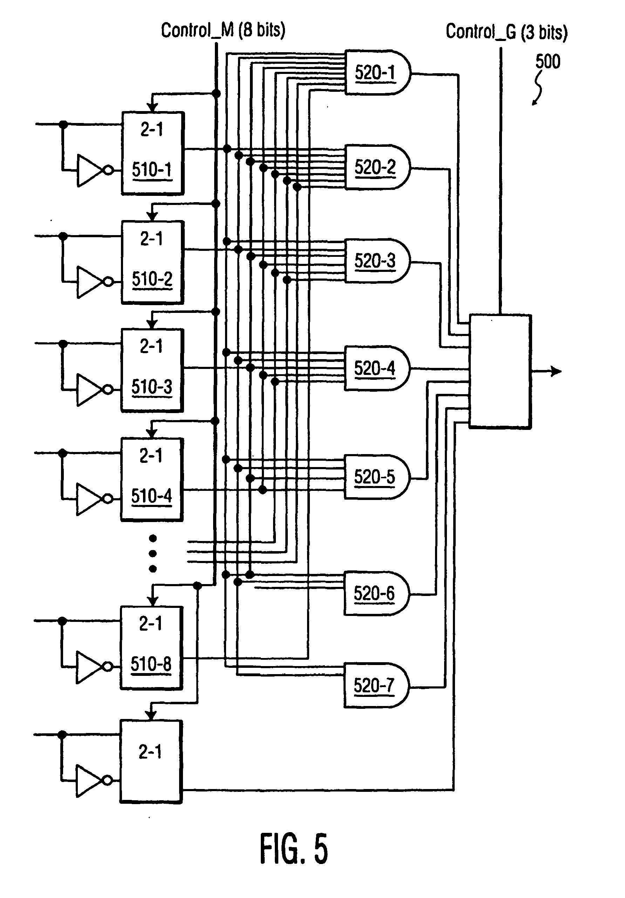

FIG. 5 illustrates an alternate embodiment of the present invention. FIG. 5 illustrates selection circuitry 500 for determining when an "event" (e.g., a mistake) has occurred when there are at least three (3) latches. The exemplary selection circuitry 500 is implemented using AND gates. The output of each of the n latches are received at the input of the selection circuitry 500, and are labeled Zone n. In the exemplary embodiment, n is equal to eight (8). The respective zone inputs and an inverted version thereof are each applied to a corresponding multiplexer 510-n. Each multiplexer 510 is controlled by a control signal, Control_M, that selects the zone input or corresponding inverted version thereof.

The selection circuitry 500 includes an array of AND gates 520-1 through 520-n-1, where each of the n AND gates receives between 2 and n inputs, as shown in FIG. 5. Each AND gate 520 will generate a binary value of one (1) if the applied input pattern is useful. For example, the AND gate 520-n-1 will generate a one (1) only when both inputs (from zone 0 and zone 1) are high (an expected condition for substantially identical latches).

By selecting the inverted input at Zone 0 and the uninverted input at Zone 1, however (or vice versa), with appropriate selection of the Control_M signal, the AND gate 520-n-1 will generate a one (1) every time Zone 0 has a value of one and Zone 1 has a value of zero (i.e., they are different, which is a less likely condition for substantially identical latches). It is again noted that since the latches (not shown in FIG. 5) are substantially symmetric, it is equally likely that an uninverted output could be arbitrarily designated as the output of a given latch. Thus, the multiplexers 510 allow the correct configuration to be selected, where the latches will disagree only under meta-stable conditions. For example, various combinations can be evaluated, until a combination is identified that exhibits meta-stable behavior only occasionally (since a combination that always or never exhibited meta-stable behavior would be undesirable).

The AND gate 520-n-1 will not generate a one (I), however, if Zone 0 has a value of zero and Zone 1 has a value of one (leading to some loss of efficiency relative to an XOR implementation). Similarly, the AND gate 520-n-1 will not generate a one (1) if Zone 0 and Zone 1 both have a value of zero or one (they agree). The exemplary selection circuitry 500 allows up to eight (8) latches to be combined in various ways to create an "event" that triggers the generation of a random bit.

## Claims

1. A method for generating a random number using a latch (320-1, 320-2), susceptible to metastability, comprising the steps of
- detecting a meta-stable state of said latch (320-1, 320-2) and
- generating a random bit based upon an occurrence of said meta-stable state,
**characterized in that**
said detecting step comprises the step of operating a plurality of latches (320-1, 320-2) in parallel and triggering the generation of a random bit when at least two of the latches (320-1, 320-2) have different outputs.

2. The method of claim 1, wherein said step of detecting a different output at two or more of said latches (320-1, 320-2) is performed using an exclusive OR (XOR) gate (350).

3. The method of claim 1, further comprising the step of decorrelating a marking signal to noise.

4. The method of claim 3, wherein said decorrelating step is performed by at least one linear feedback shift register (380).

5. The method of claim 1, wherein said generating step further comprises the step of generating a mistake signal if an output of a first latch (320-1) does not match an output of a second latch (320-2).

6. The method of claim 5, wherein the mistake signal causes a random bit to be acquired based on the marking input.

7. The method of claim 1, further comprising the step of synchronizing the outputs of said latches (320-1, 320-2) with a local clock source (305).

8. The method of claim 1, further comprising the step of collecting a plurality of said random bits to produce a random number.

9. The method of claim 8, further comprising the step of releasing collected bits from a shift register (360) to generate said random number.

10. The method of claim 1, wherein said detecting step further comprises the step of comparing the outputs of a plurality of latches (320-1, 320-2) in a collection of predefined outputs and generating a random bit if one of said collection of predefined outputs is detected.

11. The method of claim 1, wherein said detecting step further comprises the step of operating a plurality of latches (320-1, 320-2) in parallel and wherein said method further comprises the step of evaluating a plurality of combinations of selecting and combining inverted and uninverted outputs of said plurality of latches (320-1, 320-2) to find a suitable combination.

12. A random number generator (300), comprising a latch (320-1, 320-2), susceptible to metastability, operated in a meta-stable state to generate a random bit based upon an occurrence of said meta-stable state,
**characterized in that**
said occurrence of said meta-stable state is detected by a means (332-1, 332-2, 334-1, 334-2, 336-1, 336-2, 350) for detecting a different output at two or more of a plurality of latches (320-1, 320-2) operated in parallel, and triggering the generation of a random bit when at least two of the latches (320-1, 320-2) have different outputs.

13. The random number generator (300) of claim 12, wherein the outputs of said latches (320-1, 320-2) are synchronized with a local clock source (305).

14. The random number generator (300) of claim 12, wherein a plurality of said random bits are collected to produce a random number.

15. The random number generator (300) of claim 14, wherein collected bits from a shift register (360) are released to generate said random number.

16. The random number generator (300) of claim 12, wherein said occurrence of said meta-stable state is detected by comparing outputs in a collection of predefined outputs and generating a random bit if one of said collections of predefined outputs is detected.

17. The random number generator (300) of claim 12, further comprising an exclusive OR (XOR) gate (350) to detect a different output at said at least two of said latches (320-1, 320-2).

## Patentansprüche

1. Verfahren zur Generierung einer Zufallszahl unter Verwendung eines Latches (320-1, 320-2), das für Metastabilität anfällig ist, aufweisend folgende Schritte:
- Detektion eines metastabilen Zustands des genannten Latches (320-1, 320-2),
- Generierung eines Zufalls-Bits auf Basis eines Auftreten des genannten metastabilen Zustands,
**dadurch gekennzeichnet, dass**
der genannte Detektionsschritt einen Schritt umfasst, bei dem eine Mehrzahl von Latches (320-1, 320-2) parallel betrieben wird und bei dem die Generierung eines Zufalls-Bits getriggert wird, wenn mindestens zwei der Latches (320-1, 320-2) unterschiedliche Ausgangszustände haben.

2. Verfahren nach Anspruch 1, wobei der genannte Schritt des Detektierens eines unterschiedlichen Ausgangszustands der zwei oder mehr der Latches (320-1, 320-2) unter Verwendung eines Exklusiv-OR (XOR) Gatters (350) durchgeführt wird.

3. Verfahren nach Anspruch 1, weiterhin aufweisend den Schritt einer Dekorrelation eines Markierungssignals von einem Rauschen.

4. Verfahren nach Anspruch 3, wobei der genannte Dekorrelationsschritt mittels mindestens eines linearen Rückkopplungs-Schieberegisters (380) durchgeführt wird.

5. Verfahren nach Anspruch 1, wobei der genannte Generierungsschritt weiterhin den Schritt einer Generierung eines Fehlersignals umfasst, wenn ein Ausgangszustand eines ersten Latches (320-1) nicht mit einem Ausgangszustand eines zweiten Latches (320-2) übereinstimmt.

6. Verfahren nach Anspruch 5, wobei das Fehlersignal die Akquirierung eines Zufalls-Bits anhand des eingehenden Markierungs-Signals auslöst.

7. Verfahren nach Anspruch 1, weiterhin aufweisend den Schritt einer Synchronisation der Ausgangszustände der Latches (320-1, 320-2) mit einem lokalen Takt (305).

8. Verfahren nach Anspruch 1, weiterhin aufweisend den Schritt des Sammelns einer Mehrzahl der genannten Zufalls-Bits zur Erstellung einer Zufallszahl.

9. Verfahren nach Anspruch 8, weiterhin aufweisend den Schritt einer Ausgabe von gesammelten Bits aus einem chieberegister (360), um die genannte Zufallszahl zu generieren.

10. Verfahren nach Anspruch 1, wobei der genannte Detektionsschritt weiterhin den Schritt eines Vergleichs der Ausgangszustände einer Mehrzahl von Latches (320-1, 320-2) in einer Sammlung von vordefinierten Ausgangszuständen und der Generierung eines Zufalls-Bits umfasst, wenn einer aus der genannten Sammlung von vordefinierten Ausgangszuständen detektiert wird.

11. Verfahren nach Anspruch 1, wobei der genannte Detektionsschritt weiterhin den Schritt eines parallelen Betreibens einer Mehrzahl von Latches (320-1, 320-2) aufweist und wobei das genannte Verfahren weiterhin den Schritt einer Evaluierung einer Mehrzahl von Kombinationen von Selektionen und Kombinationen invertierter und nicht-invertierter Ausgangszustände der genannten Mehrzahl von Latches (320-1, 320-2) zum Auffinden einer geeigneten Kombination umfasst.

12. Zufallszahlgenerator (300), aufweisend ein Latch (320-1, 320-2), das für Metastabilität anfällig ist und das in einem metastabilen Zustand betrieben wird, um basierend auf einem Auftreten des genannten metastabilen Zustands ein Zufalls-Bit zu generieren, **dadurch gekennzeichnet, dass** das genannte Auftreten des genannten metastabilen Zustands durch ein Mittel (332-1, 332-2, 334-1, 334-2, 336-1, 336-2, 350) zur Detektion von unterschiedlichen Ausgangszuständen bei zwei oder mehr einer Mehrzahl von parallel betriebenen Latches (320-1, 320-2), und zur Triggerung einer Zufalls-Bit-Generierung, wenn mindestens zwei der Latches (320-1, 320-2) unterschiedliche Ausgangszustände haben, detektiert wird.

13. Zufallszahlgenerator (300) nach Anspruch 12, worin die Ausgangszustände der genannten Latches (320-1, 320-2) mit einem lokalen Takt (305) synchronisiert werden.

14. Zufallszahlgenerator (300) nach Anspruch 12, worin eine Mehrzahl der genannten Zufalls-Bits gesammelt wird, um eine Zufallszahl zu generieren.

15. Zufallszahlgenerator (300) nach Anspruch 14, worin gesammelte Bits aus einem Schieberegister (360) ausgegeben werden, um die genannte Zufallszahl zu generieren.

16. Zufallszahlgenerator (300) nach Anspruch 12, worin genanntes Auftreten des genannten metastabilen Zustands detektiert wird durch Vergleich von Ausgangszuständen in einer Sammlung von vordefinierten Ausgangszuständen und durch Generierung eines Zufalls-Bits, wenn einer aus der genannten Sammlung von vordefinierten Ausgangszuständen detektiert wird.

17. Zufallszahlgenerator (300) nach Anspruch 12, weiterhin umfassend ein Exklusiv-OR (XOR) Gatter (350), um einen unterschiedlichen Ausgangszustand von mindestens zwei der genannten Latches (320-1, 320-2) zu detektieren.

## Revendications

1. Procédé de génération d'un nombre aléatoire utilisant un latch (320-1, 320-2), susceptible de métastabilité, comprenant les étapes de
- détection d'un état métastable du latch (320-1, 320-2) et
- génération d'un bit aléatoire basé sur l'apparition de l'état métastable,
**caractérisé en ce que** l'étape de détection comprend l'étape de faire fonctionner une pluralité de latches (320-1, 320-2) en parallèle et de déclencher la génération du bit aléatoire lorsqu'au moins deux desdits latches (320-1, 320-2) ont des sorties différentes.

2. Procédé selon la revendication 1, dans lequel l'étape de détection d'une sortie différente à deux ou plus desdits latches (320-1, 320-2) est exécutée en utilisant une porte OU exclusif (XOR) (350).

3. Procédé selon la revendication 1, comprenant en outre l'étape de décorrélation d'un signal de marquage par rapport au bruit.

4. Procédé selon la revendication 3, dans lequel l'étape de décorrélation est exécutée par au moins un registre à décalage à rétroaction linéaire (380).

5. Procédé selon la revendication 1, dans lequel l'étape de génération comprend en outre l'étape de génération d'un signal d'erreur si une sortie d'un premier latch (320-1) ne s'accorde pas à une sortie d'un deuxième latch (320-2).

6. Procédé selon la revendication 5, dans lequel le signal d'erreur entraine un bit aléatoire à acquérir en se basant sur une entrée de marquage.

7. Procédé selon la revendication 1, comprenant en outre l'étape de synchronisation des sorties desdits latches (320-1, 320-2) avec une source d'horloge locale (305).

8. Procédé selon la revendication 1, comprenant en outre l'étape de collection d'une pluralité desdits bits aléatoires pour produire un nombre aléatoire.

9. Procédé selon la revendication 8, comprenant en outre l'étape de libération de bits collectés depuis un registre à décalage (360) pour générer ledit nombre aléatoire.

10. Procédé selon la revendication 1, dans lequel l'étape de détection comprend en outre l'étape de comparaison des sorties d'une pluralité de latches (320-1, 320-2) dans une collection de sorties prédéterminées et l'étape de génération d'un bit aléatoire si l'une des collections de sorties prédéfinies est détectée.

11. Procédé selon la revendication 1, dans lequel l'étape de détection comprend en outre l'étape de faire fonctionner en parallèle une pluralité de latches (320-1, 320-2) et dans lequel le procédé comprend en outre l'étape d'évaluation d'une pluralité de combinaison pour sélectionner et combiner des sorties inversées et non inversées de ladite pluralité de latches (320-1, 320-2) pour trouver une combinaison appropriée.

12. Générateur (300) de nombre aléatoire, comprenant un latch (320-1, 320-2), susceptible de métastabilité, fonctionnant dans un état métastable pour engendrer un bit aléatoire basé sur l'apparition dudit état métastable,
**caractérisé en ce que**
l'apparition dudit état métastable est détectée par des moyens (332-1, 332-2, 334-1, 334-2, 336-1, 336-2, 350) pour détecter une sortie différente à deux latches ou plus parmi une pluralité de latches (320-1, 320-2) fonctionnant en parallèle et pour déclencher la génération d'un bit aléatoire lorsqu'au moins deux desdits latches (320-1, 320-2) ont des sorties différentes.

13. Générateur (300) de nombre aléatoire selon la revendication 12, dans lequel les sorties desdits latches (320-1, 320-2) sont synchronisées avec une source d'horloge locale (305).

14. Générateur (300) de nombre aléatoire selon la revendication 12, dans lequel une pluralité de bits aléatoires est collectée pour produire un nombre aléatoire.

15. Générateur (300) de nombre aléatoire selon la revendication 14, dans lequel les bits collectés depuis un registre à décalage (360) sont libérés pour engendrer le nombre aléatoire.

16. Générateur (300) de nombre aléatoire selon la revendication 12, dans lequel l'apparition de l'état métastable est détectée en comparant les sorties dans une collection de sorties prédéfinies et en engendrant un bit aléatoire si l'une desdites collections de sorties prédéfinies est détectée.

17. Générateur (300) de nombre aléatoire selon la revendication 12, comprenant en outre une porte OU exclusif (XOR) (350) pour détecter une sortie différente auxdits au moins deux latches (320-1, 320-2).
